# EUROPÄISCHE PATENTSCHRIFT

(11) **EP 3 663 486 B1**
(45) Veröffentlichungstag und Bekanntmachung des Hinweises auf die Patenterteilung: **20.04.2022**
(21) Anmeldenummer: 19202271.3
(22) Anmeldetag: 09.10.2019
(51) Int. Cl.: E04H 6/12, E04H 6/42, B62D 15/02, E04H 6/30, E04H 6/36

(54) **PARKROBOTER FÜR EIN KRAFTFAHRZEUG SOWIE VERFAHREN ZUM BETREIBEN EINES DERARTIGEN PARKROBOTERS**
PARKING ROBOT FOR A MOTOR VEHICLE AND METHOD FOR OPERATING THE SAME
ROBOT DE STATIONNEMENT POUR UN VÉHICULE AUTOMOBILE AINSI QU'UN PROCÉDÉ DE FONCTIONNEMENT D'UN TEL ROBOT DE STATIONNEMENT

(30) Priorität: 06.12.2018 DE 102018221170
(43) Veröffentlichungstag der Anmeldung: 10.06.2020
(73) Patentinhaber: Volkswagen Aktiengesellschaft, 38440 Wolfsburg (DE)
(72) Erfinder: Tzivanopoulos, Theodoros, 38442 Wolfsburg (DE)

(56) Entgegenhaltungen:
- CA-A1- 2 836 301
- DE-A1-102015 203 506
- DE-A1-102017 217 827
- US-A1- 2008 181 755

## Beschreibung

Die Erfindung betrifft einen Parkroboter für ein Kraftfahrzeug sowie ein Verfahren zum Betreiben eines derartigen Parkroboters für ein Kraftfahrzeug.

Ein Parkroboter ist üblicherweise dazu ausgelegt, ein Kraftfahrzeug innerhalb einer vorgegebenen Infrastrukturumgebung, beispielsweise einem Parkhaus, zu einer vorgegebenen Parkposition zu transportieren. Der Parkroboter fährt dafür beispielsweise mit zumindest einem Teilbereich unter das Kraftfahrzeug, hebt dieses an und fährt daraufhin mit dem angehobenen Kraftfahrzeug zur vorgegebenen Parkposition, an der er das Kraftfahrzeug wieder absetzt. Mittels eines Parkroboters können somit Kraftfahrzeuge, unabhängig davon, ob sie beispielsweise über ein Fahrerassistenzsystem zum zumindest teilautonomen Einparken verfügen oder nicht, vollautonom und somit ohne Zutun eines Fahrers des Kraftfahrzeugs innerhalb der Infrastrukturumgebung bewegt werden.

In der DE 10 2016 224 098 A1 wird eine omnidirektionale mobile Kraftfahrzeug-Transportplattform beschrieben, die wenigstens drei Mecanumräder aufweist. Mit dieser mobilen Kraftfahrzeug-Transportplattform kann in den Zwischenraum zwischen einem Fahrzeugboden eines Kraftfahrzeugs und einer Fahrbahn gefahren werden und daraufhin das Kraftfahrzeug mittels einer Hubvorrichtung der Kraftfahrzeug-Transportplattform von der Fahrbahn angehoben werden. Hiermit wird das Kraftfahrzeug zumindest achsweise oder vollständig von der Fahrbahn abgehoben.

In der CN 207761382 U wird ein Transportwagen für ein Kraftfahrzeug beschrieben, der an zwei gegenüberliegenden Seiten jeweilige Klemmteile aufweist und dazu ausgelegt ist, unterhalb des Kraftfahrzeugs positioniert zu werden und mit den jeweiligen Klemmteilen ein jeweiliges Rad einer Radachse des Kraftfahrzeugs anzuheben.

Die DE 10 2015 203 506 A1 zeigt eine automobile Transporteinheit zum Positionieren von Stellfahrzeugen in einen Parkraum. Die Transporteinheit ist dazu ausgebildet, zumindest ein Rad des Stellfahrzeugs anzuheben und das angehobene Stellfahrzeug zu einer vorgegebenen Parkposition im Parkraum zu transportieren. DE 10 2015 203506 A1 zeigt insbesondere einen Parkroboter für ein Kraftfahrzeug, wobei der Parkroboter ein Paar Radauflagearme aufweist und dazu ausgelegt ist, mit eingeklappten Radauflagearmen von außen neben ein Rad des Kraftfahrzeugs autonom heranzufahren, das Rad durch Ausklappen des Paars der Radauflagearme anzuheben auf dem Parkroboter zu fixieren.

Es ist die Aufgabe der Erfindung, eine Lösung bereitzustellen, mit der ein Parkroboter, der ein Kraftfahrzeug transportiert, besonders einfach Rampen und Steigen überwinden kann.

Diese Aufgabe wird durch die Gegenstände der unabhängigen Patentansprüche gelöst. Vorteilhafte Ausgestaltungen mit zweckmäßigen und nicht-trivialen Weiterbildungen der Erfindung sind in den abhängigen Ansprüchen, der folgenden Beschreibung und den Figuren angegeben.

Der Erfindung liegt die Erkenntnis zugrunde, dass mit herkömmlichen einteiligen oder mehrteiligen Parkrobotern, die jeweils im Bereich einer Radachse des Kraftfahrzeugs oder im Bereich einzelner Räder des Kraftfahrzeugs die jeweiligen Räder anheben, es möglich ist, dass das Kraftfahrzeug bei einer Fahrt auf eine Rampe oder eine Steige vom Parkroboter herunterrollt. Der Grund hierfür ist, dass der Parkroboter üblicherweise zumindest ein Paar Radauflagearme aufweist, die das jeweilige Rad des Kraftfahrzeugs in einem unteren jeweiligen Teilbereich des Rades festhalten und anheben. Sobald der Parkroboter mit dem angehobenen Rad jedoch beispielsweise an eine Rampe gelangt und beginnt diese hinaufzufahren, verlagert sich der Aufstandspunkt zwischen Rad und Parkroboter. Insbesondere bei einem Kraftfahrzeug mit großen Rädern ist es nun möglich, dass das Kraftfahrzeug, anstelle mit dem Parkroboter die Rampe hinaufzufahren, über den hinteren Teil des Parkroboters hinüberrollt und folglich vom Parkroboter herunterfällt. Ein rampentauglicher Parkroboter sollte daher beispielsweise einen Haltemechanismus aufweisen, mit dem ein Rad besonders zuverlässig auf dem Parkroboter fixiert werden kann.

Der erfindungsgemäße Parkroboter für ein Kraftfahrzeug weist ein Paar Radauflagearme und einen Radhaltearm auf. An einem Parkrobotergrundkörper sind somit beispielsweise in einem unteren Bereich die zwei Radauflagearme angeordnet und in einem beispielsweise oberen Bereich der Radhaltearm. Der Parkroboter ist nun dazu ausgelegt, mit eingeklappten Radauflagearmen und eingeklapptem Radhaltearm von außen neben ein Rad des Kraftfahrzeugs autonom heranzufahren. Der Parkroboter ist also dazu ausgelegt, sich an einer vorgegebenen Aufnahmeposition seitlich von einem von beispielsweise vier Rädern des Kraftfahrzeugs zu positionieren. In der eingeklappten jeweiligen Lage der Radauflagearme sowie des Radhaltearms sind diese derart angeordnet, dass die jeweiligen Radauflagearme parallel zu einer Parkroboterlängsrichtung und der Radhaltearm parallel zu einer Parkroboterhochrichtung angeordnet sind. Eine Tiefe des Parkroboters, das heißt eine Ausdehnung des Parkroboters senkrecht zur Parkroboterlängsrichtung, ist daher so klein wie möglich und nur abhängig von der Tiefe eines Parkrobotergrundkörpers. Denn wird der Parkroboter seitlich und somit in Parkroboterlängsrichtung betrachtet, ragt keiner der Radauflagearme und auch nicht der Radhaltearm in einer Parkroboterquerrichtung aus dem Parkrobotergrundkörper hervor. Der Parkroboter ist zudem dazu ausgelegt, selbstständig an eines der Räder des Kraftfahrzeugs heranzufahren. Er ist somit zu einem autonomen Fahren ausgelegt.

Der Parkroboter ist zudem dazu ausgelegt, das Rad des Kraftfahrzeugs durch Ausklappen des Paars der Radauflagearme anzuheben. Hierbei ist der Parkroboter dazu ausgelegt, die jeweiligen Radauflagearme von der eingeklappten Stellung aus nach vorne und somit letztendlich in eine senkrecht zur Parkroboterlängsrichtung sowie zur Parkroboterhochrichtung angeordnete Stellung zu bringen. Einer der Radauflagearme ist hierbei in einer Fahrzeuglängsrichtung vor dem Rad des Kraftfahrzeugs angeordnet, wobei der andere Radauflagearm in Fahrzeuglängsrichtung hinter dem Rad angeordnet ist. Sobald die beiden Radauflagearme auf jeweiligen Seiten des Rades das Rad des Kraftfahrzeugs berühren, beginnen sie durch weiteres Zusammendrücken, das Rad von einem Fahrboden, auf dem das Kraftfahrzeug steht, anzuheben. Letztendlich wird durch das Ausklappen des Paars der Radauflagearme ermöglicht, dass sich der Abstand zwischen dem Kraftfahrzeugboden und dem Fahrboden zumindest im Bereich des angehobenen Rades erhöht.

Der Parkroboter ist außerdem dazu ausgelegt, durch Ausklappen des Radhaltearms das Rad des Kraftfahrzeugs auf dem Parkroboter zu fixieren. Der Radhaltearm, der sich beispielweise von einem oberen Bereich des Parkroboters aus auf das Rad zubewegt, wird hierbei zum Beispiel so lange ausgeklappt, bis er das Rad des Kraftfahrzeugs berührt und somit dazu beiträgt, das Rad gegen ein Herunterrollen des Rades von den Radauflagearmen, beispielsweise während einer Fahrt auf einer Rampe, zu sichern. Der Radhaltearm ist also ausgelegt, das Rad auf dem Parkroboter festzuhalten. Dies ist insbesondere bei Kraftfahrzeugen mit großen Rädern besonders sinnvoll. Denn ein Abstand zwischen den beiden Radauflagearmen sowie deren Höhe relativ zum Fahrboden ist fest vorgegeben, sodass mit dem Parkroboter sowohl Kraftfahrzeuge mit kleinen Rädern als auch Kraftfahrzeuge mit großen Rädern angehoben und transportiert werden können. Bei den genannten größeren Rädern erreicht der Parkroboter somit beispielsweise ein Limit seiner statischen Stabilität, sodass es möglich ist, dass das Rad, insbesondere bei einer Fahrt auf eine Rampe oder eine Steige, über den weiter unten an der Rampe angeordneten Radauflagearm hinüberrollt. Das Rad kann jedoch nicht nur bei Rampen und Steigen von dem Parkroboter herunterrollen, denn auch bei der Fahrt über eine Bodenwelle oder ein Schlagloch ist es möglich, dass das Kraftfahrzeug beispielsweise über den in Fahrtrichtung vorderen Radauflagearm hinüberrollt. Durch das Ausklappen des Radhaltearms wird die Wahrscheinlichkeit eines derartigen Herunterrollens vom Parkroboter des Rades des Kraftfahrzeugs sehr reduziert, da nun das Rad besonders zuverlässig und fest auf dem Parkroboter fixiert ist. Mit dem erfindungsgemäßen Parkroboter sind daher Fahrten auf Rampen, Steigen oder Fahrböden mit Unebenheiten besonders zuverlässig möglich.

Erfindungsgemäß ist es vorgesehen, dass die jeweiligen Radauflagearme eine jeweilige Abgleitrolle aufweisen. Bei dieser Abgleitrolle handelt es sich um eine passive Rolle (Freiheitsgrad f=1), die stets drehbar um eine eigene Drehachse gelagert ist. Die jeweilige Abgleitrolle ist somit nicht fest relativ zum Parkroboter sowie zum angehobenen Rad angeordnet. Die jeweilige Drehachse der jeweiligen Abgleitrolle ist in einer ausgeklappten Stellung nach dem Anheben des Rades des Kraftfahrzeugs parallel zu einer Radachse des Kraftfahrzeugs angeordnet. Nachdem der Parkroboter mit eingeklappten Radauflagearmen von außen neben das eine der Räder des Kraftfahrzeugs automatisch herangefahren ist, wird durch Ausklappen des Paars der Radauflagearme das Rad angehoben, wobei in der Endstellung der ausgeklappten Radauflagearme diese parallel zur Radachse des Kraftfahrzeugs im Bereich des Rades angeordnet sind. Die jeweiligen Abgleitrollen sind also in der ausgeklappten Stellung der jeweiligen Radauflagearme in einer Längsrichtung der jeweiligen Abgleitrollen parallel zur Radachse des Kraftfahrzeugs angeordnet und somit senkrecht zu einer kreisförmigen Radfläche des Rades des Kraftfahrzeugs. Durch Drücken der Radauflagearme bei deren Ausklappen gegen das jeweilige Rad des Kraftfahrzeugs kann dieses an den Abgleitrollen abgleiten, wobei letztendlich das Rad, wenn die jeweiligen Radauflagearme ihre Endposition erreicht haben, in der sie parallel zu den Radachsen des Kraftfahrzeugs stehen, vom Fahrzeugboden angehoben ist. Durch das beidseitige Drücken mit jeweiligen Radauflagearmen gegen das jeweilige Rad wird erreicht, dass bei dem Anheben sowie gegebenenfalls dem Absetzen des Kraftfahrzeugs das Kraftfahrzeug nicht wegrollt und zudem das Anheben und das Absetzen besonders effizient hinsichtlich erforderlicher Energie zum Anheben beziehungsweise Absetzen des Kraftfahrzeugs ist.

In einer vorteilhaften Ausgestaltungsform der Erfindung ist es vorgesehen, dass an einem in einer Parkroboterhochrichtung oben angeordneten Teilbereich des Parkroboters der Radhaltearm und an einem in Parkroboterhochrichtung unten angeordneten Teilbereich des Parkroboters das Paar Radauflagearme angeordnet ist. Jeweilige Verbindungslinien einer jeweiligen Mittelachse eines der Radauflagearme sowie des Radhaltearms treffen in jeweiliger ausgeklappter Stellung in einem Winkel zwischen 0 und 90 Grad aufeinander. Durch diese Anordnungen an dem Parkroboter, beispielsweise an einem Parkrobotergrundkörper, ist es möglich, besonders vorteilhaft das Rad des Kraftfahrzeugs in Fahrbodennähe von einem Fahrboden hochzuheben und gleichzeitig durch den oben positionierten Haltearm zuverlässig auf dem Parkroboter zu fixieren. Diese Anordnung des Radhaltearms sowie der Radauflagearme relativ zum Parkroboter in Parkroboterhochrichtung ist somit die Voraussetzung dafür, dass mit dem Parkroboter ein rampentauglicher Parkroboter für Fahrten an Rampen und Steigen ermöglicht wird.

Eine weitere Ausgestaltungsform der Erfindung sieht vor, dass der Radhaltearm eine Abgleitrolle aufweist. Der Radhaltearm weist somit ebenfalls eine passive Rolle auf, die um eine eigene Drehachse drehbar gelagert ist und somit nicht statisch in einer fest vorgegebenen Position am Radhalterarm befestigt ist. Die Drehachse der Abgleitrolle ist in einer ausgeklappten Stellung nach dem Anheben des Rades des Kraftfahrzeugs in einem Winkel zwischen größer als 0 Grad und kleiner als 90 Grad zu der Radachse des Kraftfahrzeugs angeordnet. Der Radhaltearm ist zudem dazu ausgelegt, mit der Abgleitrolle an einem in einer Kraftfahrzeughochrichtung oberen Teilbereich des Rades auf das Rad des Kraftfahrzeugs zu drücken. Durch die Anordnung des Radhaltearms in dem in Parkroboterhochrichtung oben angeordneten Teilbereich des Parkroboters ergibt sich diese Stellung des ausgeklappten Radhaltearms, das heißt dass dieser im oberen Teilbereich des Rades auf das Rad des Kraftfahrzeugs drückt. Hierbei drückt der Radhaltearm jedoch nicht von oben auf das Rad des Kraftfahrzeugs, was aufgrund der Kraftfahrzeugkarosserie auch nicht möglich wäre, sondern drückt eher auf einen oberen Randbereich eines Radmantels des Rades. Hierbei kann es vorgesehen sein, dass der Radhaltearm lediglich das Rad des Kraftfahrzeugs berührt, beispielsweise mit einer kleinen Kraft pro Fläche, die unter einem vorgegebenen Kraftgrenzwert pro Fläche liegt, um einen entsprechenden kleinen Druck auf das Rad auszuüben. Der kleine Druck auf das Rad muss jedoch ausreichend groß sein, um das Rad zuverlässig auf dem Parkroboter zu fixieren. Je nachdem, wie groß das Rad des Kraftfahrzeugs ist, wird der Winkel zwischen dem Radhaltearm und der Radachse des Kraftfahrzeugs größer. Dadurch, dass der Winkel der ausgeklappten Stellung des Radhaltearms variabel und an einen Raddurchmesser anpassbar ist, können mit dem Parkroboter Kraftfahrzeuge mit verschieden großen Rädern jeweils zuverlässig transportiert werden, wobei der Parkroboter hierbei genau ein Rad des Kraftfahrzeugs anhebt und auf dem Parkroboter fixiert.

In einer weiteren vorteilhaften Ausgestaltungsform der Erfindung ist es vorgesehen, dass der Parkroboter im Teilbereich, an dem der Radhaltearm angeordnet ist, eine Sensoreinheit umfasst. Bei dieser Sensoreinheit kann es sich beispielsweise um eine Kraftmesseinrichtung, einen Kontaktsensor, beispielsweise im Radhaltearm selbst positioniert, oder eine Kamera handeln. Der Parkroboter ist nun dazu ausgelegt, das Ausklappen des Radhaltearms unter Berücksichtigung von Sensordaten der Sensoreinheit zu steuern. Mittels beispielsweise eines Kraftmessgeräts als Sensoreinheit ist es möglich, zu erfassen, mit welcher Kraft der Radhaltearm zu einem aktuellen Zeitpunkt auf das Rad des Kraftfahrzeugs drückt. Sobald ein vorgegebenen Kraftgrenzwert erreicht ist, kann die Ausklappbewegung des Radhaltearms angehalten werden und davon ausgegangen werden, dass in dieser Stellung des Radhaltearms das Rad mit ausreichend Kraft pro Fläche und somit mit ausreichend Druck auf dem Parkroboter fixiert ist, sodass zum Beispiel steile Rampen mit dem Parkroboter ohne ein Herunterrollen des Rades des Kraftfahrzeugs von dem Parkroboter überwunden werden können. Alternativ dazu ist es möglich, dass als Sensoreinheit lediglich ein Kontaktsensor vorgesehen ist, dessen Sensordaten somit Informationen darüber enthalten, zu welchem Zeitpunkt der Radhaltearm zumindest in einem Teilbereich des Radhaltearms das Rad des Kraftfahrzeugs berührt. Abhängig von den Daten dieses Kontaktsensors kann somit ebenfalls festgelegt werden, wann das Ausklappen des Radhaltearms beendet wird, da der Radhaltearm ausreichend ausgeklappt wurde, um das Rad auf dem Parkroboter zu fixieren. Alternativ dazu kann das Ausklappen des Parkroboters mithilfe einer Kamera unterstützt werden, deren Kameradaten Informationen darüber enthalten, wann der Radhaltearm auf dem Rad des Kraftfahrzeugs angekommen ist und auf dieses drückt. Mithilfe der Sensoreinheit, die bevorzugt im Bereich des Radhaltearms und somit im oberen Teilbereich des Parkroboters angeordnet ist, ist es somit möglich, das Ausfahren des Radhaltearms besonders zuverlässig zu gestalten, sodass unabhängig von einem Ermitteln eines Raddurchmessers stets die Ausklappstellung des Radhaltearms gewählt und gefunden werden kann, mit der das Rad optimal auf dem Parkroboter fixiert werden kann. Hierbei können Ansteuerbefehle für den Radhaltearm sowie eine Auswertung der Sensordaten der Sensoreinheit von einer dafür vorgesehenen Steuereinheit des Parkroboters bestimmt werden beziehungsweise erfolgen.

In einer Weiterbildung der Erfindung ist es vorgesehen, dass der Parkroboter eine elektrische Antriebsmaschine, eine Batterie zum Versorgen der elektrischen Antriebsmaschine mit elektrischer Energie sowie zumindest ein Antriebsrad zum Fortbewegen des Parkroboters umfasst. Der Parkroboter ist somit dazu ausgelegt, unabhängig von dem Kraftfahrzeug oder anderen Parkrobotern seine Radauflagearme und seinen Radhaltearm anzusteuern sowie sich auf dem Fahrboden, beispielsweise innerhalb einer Infrastrukturumgebung wie einem Parkhaus, zu bewegen. Mittels der elektrischen Antriebsmaschine, der Batterie und dem zumindest einen Antriebsrad ist der Parkroboter außerdem dazu ausgelegt, Rampen oder andere Steigen beispielsweise innerhalb dieser Infrastrukturumgebung zu überwinden. Der Parkroboter kann zudem eine Steuereinrichtung umfassen, die dazu ausgelegt ist, die elektrische Antriebsmaschine derart anzusteuern, dass diese den Parkroboter auf einer beispielsweise vorgegebenen Fahrtrajektorie von einer Startposition zu einer Zielposition, beispielsweise zu einem vorgegebenen Stellplatz im Parkhaus, autonom bewegt. Der Parkroboter ist zudem dazu ausgelegt, zumindest eine Teilmasse des Kraftfahrzeugs zusätzlich zu einer Eigenmasse des Parkroboters zu tragen, damit beispielsweise ein Kraftfahrzeug mit vier Rädern von insgesamt vier Parkrobotern, die jeweils über eine elektrische Antriebsmaschine, eine Batterie zum Versorgen der elektrischen Antriebsmaschine mit elektrischer Energie sowie zumindest ein Antriebsrad zum Fortbewegen des jeweiligen Parkroboters verfügen, von der Startposition zur Zielposition gegebenenfalls auch über mehrere Etagen eines Parkhauses transportiert werden kann. Der Parkroboter verfügt also über die nötigen Komponenten, um einen autonomen Transport zumindest einer Teilmasse des Kraftfahrzeugs zu ermöglichen.

In einer weiteren vorteilhaften Ausgestaltungsform der Erfindung ist es vorgesehen, dass der Parkroboter eine Sensoreinrichtung umfasst, die dazu ausgelegt ist, eine Umgebung des Parkroboters zu erfassen sowie Hindernisse für den Parkroboter in der erfassten Umgebung zu lokalisieren. Bei der Sensoreinrichtung des Parkroboters kann es sich beispielsweise um eine Kamera, ein Radargerät, einen Laserscanner, ein Ultraschallgerät oder ein Lidar-Gerät handeln. Diese Sensoreinrichtung ist bevorzugt ebenfalls in einem oberen Teilbereich des Parkroboters angeordnet, beispielsweise zusätzlich zu der Sensoreinheit zum Unterstützen des Ausklappens des Radhaltearms. Diese Sensoreinrichtung ist nun dazu ausgelegt, die Umgebung des Parkroboters zu beobachten und festzuhalten, um beispielsweise Säulen in einem Parkhaus, andere Fahrzeuge innerhalb des Parkhauses oder sich im Parkhaus bewegende Personen zu erfassen. Zudem ist die Sensoreinrichtung dazu ausgelegt, festzustellen, ob es sich bei einem erfassten Objekten in der Umgebung des Parkroboters um ein Hindernisse für den Parkroboter handelt und dieses in der Umgebung des Parkroboters zu lokalisieren. Beispielsweise kann es sich bei Säulen im Parkhaus oder den anderen Fahrzeugen, die sich im Parkhaus bewegen, für den Parkroboter und das von dem Parkroboter angehobene Kraftfahrzeug um potentielle Hindernisse handeln, zum Beispiel wenn eine Fahrtrajektorie des Parkroboters auf das entsprechende Hindernis zuführt.

Basierend auf den von der Sensoreinrichtung erfassten und bestimmten Daten kann beispielsweise von einer Steuereinrichtung des Parkroboters eine Fahrtrajektorie für den Parkroboter von der Startposition zur Zielposition im Parkhaus unter Berücksichtigung der erfassten Umgebung und der in der Umgebung lokalisierten Hindernisse ermittelt werden. Diese Fahrtrajektorie eignet sich jedoch nur für Fahrten mit relativ kleinen Geschwindigkeiten von typischerweise maximal fünf bis sechs Kilometern pro Stunde. Soll der Parkroboter beziehungsweise mehrere Parkroboter, die jeweilige Räder des Kraftfahrzeugs angehoben haben, schneller beispielsweise durch das Parkhaus fahren können, können beispielsweise mittels eines Leitroboters jeweilige Fahrtrajektorien oder andere Ansteuersignale für die jeweiligen Parkroboter bereitgestellt werden, sodass auch Fahrten mit größeren Geschwindigkeiten zu der Zielposition im Parkhaus möglich sind. Bei der Bestimmung der jeweiligen Fahrtrajektorien der jeweiligen Parkroboter können zudem Kartendaten der Umgebung, zum Beispiel des Parkhauses, berücksichtigt werden. Diese können beispielsweise von einem Parkhausverwaltungsserver, das heißt von einem Infrastrukturverwaltungsserver, dem Leitroboter und/oder den jeweiligen Parkrobotern bereitgestellt werden. Durch die parkrobotereigene Sensoreinrichtung ist der Parkroboter jedoch stets in der Lage, Hindernisse in seiner Umgebung, wie beispielsweise einen auf den Parkroboter zurollenden Ball, frühzeitig zu erfassen und zu lokalisieren und gegebenenfalls eine an ihn übermittelte Fahrtrajektorie entsprechend anzupassen und/oder einen Notstopp zu veranlassen. Mittels des Parkroboters kann somit das Kraftfahrzeug durch entsprechendes Ansteuern der Antriebsmaschine gemäß der auf Basis der Sensoreinrichtung gegebenenfalls angepassten Fahrtrajektorie innerhalb des Parkhauses bewegt werden, sodass das autonome Fahren des Parkroboters mit dem angehobenen Rad des Kraftfahrzeugs zu der Zielposition im Parkhaus besonders zuverlässig möglich ist.

In einer weiteren besonders vorteilhaften Ausgestaltungsform der Erfindung ist es vorgesehen, dass der Parkroboter eine Kommunikationsschnittstelle für eine Kommunikationsverbindung mit zumindest einem weiteren Parkroboter umfasst. Über diese Kommunikationsverbindung, die zum Beispiel als drahtlose Funkverbindung, wie beispielsweise als WLAN-Verbindung, realisiert ist, kann der Parkroboter beispielsweise eine Fahrtrajektorie vom Parkhausverwaltungsserver oder einem Leitrotober empfangen, aber auch jeweilige Daten und Signale, beispielsweise Informationen über den heranrollenden Ball im Bereich des Parkroboters, an andere Parkroboter, den Leitroboter oder den Parkhausverwaltungsserver senden. Hierdurch wird beispielsweise ein Zusammenspiel aus mehreren Parkrobotern, ein Zusammenspiel mit einem Leitroboter in einem Parkrobotersystem und/oder ein Datenaustausch mit einem Infrastrukturverwaltungsserver besonders vorteilhaft möglich.

Erfindungsgemäß ist zudem ein Verfahren zum Betreiben eines Parkroboters, wie er oben beschrieben wurde, vorgesehen. Die im Zusammenhang mit dem erfindungsgemäßen Parkroboter vorgestellten bevorzugten Ausgestaltungen und deren Vorteile gelten entsprechend, soweit anwendbar, für das erfindungsgemäße Verfahren zum Betreiben eines derartigen Parkroboters. Das Verfahren zum Betreiben des Parkroboters umfasst folgende Schritte: Autonomes Heranfahren des Parkroboters mit eingeklappten Radauflagearmen und eingeklapptem Radhaltearm von außen neben einem Rad des Kraftfahrzeugs, Anheben des Rades durch Ausklappen des Paars der Radauflagearme und Fixieren des Rades auf dem Parkroboter durch Ausklappen des Radhaltearmes. Insbesondere die letzten beiden Schritte werden hierbei bevorzugt nacheinander ausgeführt, das heißt es wird zunächst das Rad des Kraftfahrzeugs angehoben und erst daraufhin das bereits angehobene Rad mittels Ausklappens des Radhaltearms auf dem Parkroboter festgehalten, das heißt fixiert.

In einer vorteilhaften Ausgestaltungsform des erfindungsgemäßen Verfahrens ist es vorgesehen, dass drei weitere Parkroboter jeweils nach dem oben beschriebenen Verfahren ein weiteres von insgesamt vier Rädern des Kraftfahrzeugs angehoben und auf dem jeweiligen Parkroboter fixiert haben. Daraufhin ist es vorgesehen, dass die mehreren Parkroboter, das heißt die insgesamt vier Roboter, in Übereinstimmung mit jeweiligen bereitgestellten Fahrtrajektorien zu einer vorgegebenen Zielposition fahren und dort das Kraftfahrzeug durch Einklappen des jeweiligen Radhaltearms und der jeweiligen Paare der Radauflagearme absetzen. Ein Kraftfahrzeug mit vier Rädern kann somit beispielsweise mittels eines Parkrobotersystems, das vier Parkroboter umfasst, von beispielsweise einer Abgabeposition in einem Eingangsbereich eines Parkhauses mittels des genannten Verfahrens zu einem Stellplatz, beispielsweise in einem Obergeschoss des Parkhauses, gefahren werden und dort auf dem gewünschten Stellplatz abgesetzt werden. Alternativ dazu können stets so viele Parkroboter für ein Kraftfahrzeug bereitgestellt werden, wie das Kraftfahrzeug Räder aufweist, auf denen es fährt. Informationen zu der Fahrroute sowie zu der gewünschten Zielposition können von dem Parkhausverwaltungsserver, das heißt von dem Infrastrukturverwaltungsserver, bereitgestellt werden. Alternativ oder zusätzlich dazu können die vier Parkroboter bei ihrem Transport des Kraftfahrzeugs durch das Parkhaus von einem Leitroboter begleitet werden, der beispielsweise vor dem Kraftfahrzeug, das von den vier Parkrobotern getragen wird, autonom voranfährt und dabei jeweilige Steuersignale, wie beispielsweise jeweilige Fahrtrajektorien, für die jeweiligen Parkroboter des Parkrobotersystems bereitstellt, wodurch eine besonders schnelle sowie rampentaugliche Fahrt des Kraftfahrzeugs durch das Parkhaus mittels der mehreren Parkrobotern ermöglicht wird.

Zu der Erfindung gehört auch die Steuereinrichtung für den Parkroboter sowie die Steuereinheit zum Ansteuern des Ausklappens des Radhaltearms des Parkroboters. Die Steuereinrichtung sowie die Steuereinheit weisen hierbei jeweils eine Prozessoreinrichtung auf, die jeweils dazu eingerichtet ist, eine jeweilige Ausführungsform des erfindungsgemäßen Verfahrens durchzuführen. Die jeweilige Prozessoreinrichtung kann hierzu zumindest einen jeweiligen Mikroprozessor und/oder zumindest einen jeweiligen Mikrocontroller aufweise. Des Weiteren kann die jeweilige Prozessoreinrichtung einen jeweiligen Programmcode aufweisen, der dazu eingerichtet ist, bei Ausführen durch die jeweilige Prozessoreinrichtung die jeweilige Ausführungsform des erfindungsgemäßen Verfahrens durchzuführen. Der jeweilige Programmcode kann in einem Datenspeicher der jeweiligen Prozessoreinrichtung gespeichert sein. Die Steuereinheit kann hierbei beispielsweise von der Steuereinrichtung des Parkroboters umfasst sein oder umgekehrt. Die beiden Steuervorrichtungen, das heißt die Steuereinrichtung sowie die Steuereinheit, können jedoch auch als zwei getrennte Steuervorrichtungen im Parkroboter vorgesehen sein.

Im Folgenden ist ein Ausführungsbeispiel der Erfindung beschrieben. Hierzu zeigt:
- Fig. 1: eine schematische Darstellung eines Kraftfahrzeugs, dessen eines Rad von einem Parkroboter angehoben wird;
- Fig. 2: eine schematische Darstellung eines Parkroboters mit eingeklappten Radauflagearmen; und
- Fig.3: eine schematische Darstellung eines eine Rampe hinauffahrenden Parkroboters, der ein Rad eines Kraftfahrzeugs anhebt.

Bei dem im Folgenden erläuterten Ausführungsbeispiel handelt es sich um eine bevorzugte Ausführungsform der Erfindung.

Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

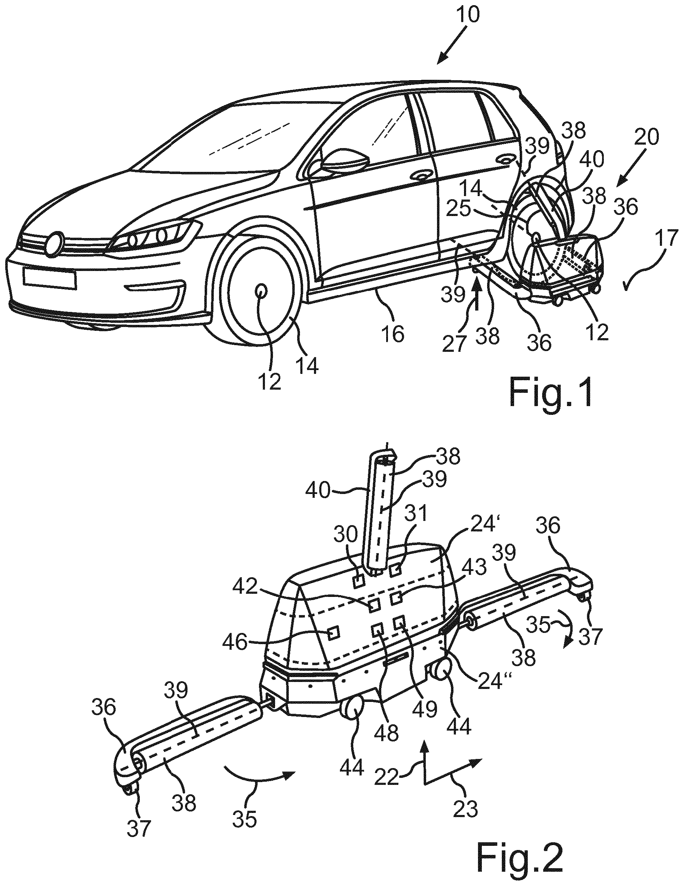

In Fig. 1 ist ein Kraftfahrzeug 10 skizziert, das mehrere Räder 14 aufweist, die an insgesamt zwei Radachsen 12 des Kraftfahrzeugs 10 angeordnet sind. An einer vorderen Radachse 12 des Kraftfahrzeugs 10 wird eines der Räder 14 des Kraftfahrzeugs 10 von einem Parkroboter 20 angehoben. Der Parkroboter 20 weist ein Paar Radauflagearme 36 und einen Radhaltearm 40 auf und ist auf zwei Antriebsrädern 44 beweglich gelagert. Hierbei wird mittels des Parkroboters 20 ermöglicht, dass ein Kraftfahrzeugboden 16 von einem Fahrboden 17, auf dem das Kraftfahrzeug 10 steht, angehoben wird. Eine Richtung 27 dieses Anhebens des Kraftfahrzeugs 10 im Bereich des vom Parkroboter 20 angehoben Rads 14 ist in Fig. 1 mit einem Pfeil skizziert.

Der Parkroboter 20 weist an den jeweiligen Radauflagearmen 36 sowie am Radhaltearm 40 jeweilige Abgleitrollen 38 aufweist, die um jeweilige Drehachsen 39 drehbar gelagert sind.

In Fig. 2 ist der Parkroboter 20 im Detail skizziert, hier jedoch mit eingeklappten Radauflagearmen 36 sowie eingeklapptem Radhaltearm 40. In dieser Anordnung der Radauflagearme 36 sowie des Radhaltearms 40 ist der Parkroboter 20 von außen neben das Rad 14 an der hinteren Radachse 12 des Kraftfahrzeugs 10 autonom herangefahren, bevor er dieses, wie in Fig. 1 skizziert, angehoben hat.

In Fig. 2 ist nun skizziert, dass an jeweiligen Enden der jeweiligen Radauflagearme 36 eine jeweilige Rolle 37 zur Stabilisierung des Parkroboters 20 angeordnet ist. Der Radhaltearm 40 ist in einem in einer Parkroboterhochrichtung 22 oben angeordneten Teilbereich 24' des Parkroboters 20 angeordnet und die beiden Radauflagearme 36 in einem in Parkroboterhochrichtung 22 unten angeordneten Teilbereich 24" des Parkroboters 20. Im oberen Teilbereich 24' des Parkroboters 20 sind zudem eine Sensoreinheit 30 sowie eine Steuereinheit 31 angeordnet.

Zudem umfasst der Parkroboter 20 eine elektrische Antriebsmaschine 42, eine Batterie 43 zum Versorgen der elektrischen Antriebsmaschine 42 mit elektrischer Energie, die zwei Antriebsräder 44 zum Fortbewegen des Parkroboters 20, eine Kommunikationsschnittstelle 46, eine Sensoreinrichtung 48 sowie eine Steuereinrichtung 49.

Zudem ist eine Parkroboterlängsrichtung 23 skizziert, parallel zu der die jeweiligen Radauflagearme 36 in eingeklappter Stellung angeordnet sind. Die Radauflagearme 36 können, alternativ zu dem skizzierten Parkroboter 20, in jeweiligen seitlichen Aussparungen des Parkroboters 20 in der eingeklappten Stellung angeordnet sein.

Der Parkroboter 20 ist dazu ausgelegt, mit eingeklappten Radauflagearmen 36 und eingeklapptem Radhaltearm 40 von außen neben eines der Räder 14 des Kraftfahrzeugs 10 autonom heranzufahren und daraufhin durch Ausklappen des Paars der Radauflagearme 36 dieses Rad 14 anzuheben und durch Ausklappen des Radhaltearms 40 auf dem Parkroboter 20 zu fixieren. Die Klapprichtung 35 der jeweiligen Radauflagearme 36 ist mit jeweiligen Pfeilen skizziert.

In Fig. 1 ist eine derartige Anordnung mit ausgeklappten Radauflagearme 36 sowie ausgeklapptem Radhaltearm 40 für den Parkroboter 20 skizzierten, wobei der Parkroboter 20 an dem Rad 14 der hinteren Radachse 12 des Kraftfahrzeugs 10 angeordnet dargestellt ist. Hierbei sind in Fig. 1 die jeweiligen Radauflagearme 36 mit ihren jeweiligen Abgleitrollen 38 derart angeordnet, dass die jeweiligen Drehachsen 39 der Abgleitrollen 38 der jeweiligen Radauflagearme 36 parallel zur Radachse 12 des Kraftfahrzeugs 10 angeordnet sind. Die Drehachse 39 der Abgleitrolle 38 des Radhaltearms 40 ist in der ausgeklappten Stellung in einem Winkel 25 zwischen größer als 0 Grad und kleiner als 90 Grad zu der Radachse 12 des Kraftfahrzeugs 10 angeordnet und drückt an einem in einer Kraftfahrzeughochrichtung, die hier der Parkroboterhochrichtung 22 entspricht, auf einen oberen Radteilbereich des Rades 14 des Kraftfahrzeugs 10.

Die in Fig. 2 dargestellte Sensoreinheit 30 des Parkroboters 20 ist beispielsweise als Kraftsensor, Kontaktsensor oder als Kamera ausgebildet und dazu ausgelegt, das Ausklappen des Radhaltearms 40 zu überwachen. Denn das Ausklappen des Radhaltearms 40 erfolgt nur bis zu dem Winkel 25, der unter Berücksichtigung der Sensordaten der Sensoreinheit 30 von der Steuereinheit 31 vorgegeben wird. Beispielsweise kann ein Kraftgrenzwert vorgegeben sein. Sobald der Radhaltearm 40 nun mit einer diesem Kraftgrenzwert entsprechenden Kraft auf das Rad 14 des Kraftfahrzeugs 10 drückt, wird dann die Ausklappbewegung des Radhaltearms 40 beendet und eine vorgegebene Stellung des Radhaltearms 40 ist erreicht. Entsprechende Steuerbefehle an einen Bewegungsmotor des Radhaltearms 40 können hierbei beispielsweise von der Steuereinheit 31 bereitgestellt werden, die auf die Daten der Sensoreinheit 30 zugreifen kann.

Die Sensoreinrichtung 48 ist dazu ausgelegt, eine Umgebung des Parkroboters 20 zu erfassen, wie beispielsweise Säulen innerhalb eines Parkhauses oder einen auf den Parkroboter 20 zurollenden Ball. Zudem ist die Sensoreinrichtung 48 dazu ausgelegt, Hindernisse für den Parkroboter 20 in der erfassten Umgebung zu lokalisieren. Denn bei den Säulen im Parkhaus oder auch bei dem auf den Parkroboter 20 zurollenden Ball handelt es sich jeweils um mögliche Hindernisse, die beispielsweise den Parkroboter 20 auf einer Fahrtrajektorie innerhalb des Parkhauses behindern können. Basierend auf den Daten der Sensoreinrichtung 48 kann nun die Steuereinrichtung 49 des Parkroboters 20 eine Fahrtrajektorie für den Parkroboter 20 ermitteln, die beispielsweise berücksichtigt, dass auf den Parkroboter 20 der erfasste und in der Umgebung lokalisierte Ball zurollt. Die Fahrtrajektorie kann somit für den Parkroboter 20 beispielsweise einen Notstopp vorsehen. Die Steuereinrichtung 49 ist nun dazu ausgelegt, die aktuelle Fahrtrajektorie mittels entsprechendes Ansteuerns der Antriebsmaschine 42 und des Antriebsrads 44 umzusetzen, das heißt den Parkroboter 20 entsprechend der aktuellen Fahrtrajektorie anzusteuern.

Über die Kommunikationsschnittstelle 46 kann der Parkroboter 20 eine Kommunikationsverbindung mit beispielsweise anderen Parkrobotern 20, die beispielsweise an den anderen Rädern 14 des Kraftfahrzeugs 10 positioniert sind, aufbauen. Diese Kommunikationsverbindung kann beispielsweise als Funkverbindung, wie eine WLAN-Verbindung, realisiert sein. Alternativ oder zusätzlich zu den jeweiligen Kommunikationsverbindungen mit den anderen Parkrobotern 20 kann der Parkroboter 20 auch eine Kommunikationsverbindung mit einem Leitroboter oder mit einem Parkhausverwaltungsserver, das heißt mit einem Infrastrukturverwaltungsserver, aufbauen und während eines Betreibens des Parkroboters 20 aufrecht erhalten. Über diese Kommunikationsverbindung können dem Parkroboter 20 beispielsweise eine Fahrtrajektorie und/oder Ansteuerbefehle bereitgestellt werden. Es ist beispielsweise möglich, dass über die Kommunikationsverbindung dem Parkroboter 20 der Ansteuerbefehl bereitgestellt wird, dass er sich dem Kraftfahrzeug 10 nähern soll. Hierbei kann spezifiziert sein, welchem Rad 14 des Kraftfahrzeugs 10 er sich nähern soll. Zudem kann der Parkroboter 20 den Befehl zum Ausklappen der Radauflagearm 36 und somit zum Anheben des Rades 14 des Kraftfahrzeugs 10 erhalten, der daraufhin beispielsweise von der Steuereinrichtung 49 durchgeführt wird. Auch entsprechende Steuerbefehle für den Radhaltearm 40 sowie den Antrieb des Parkroboters 20 sind über die Kommunikationsverbindung möglich.

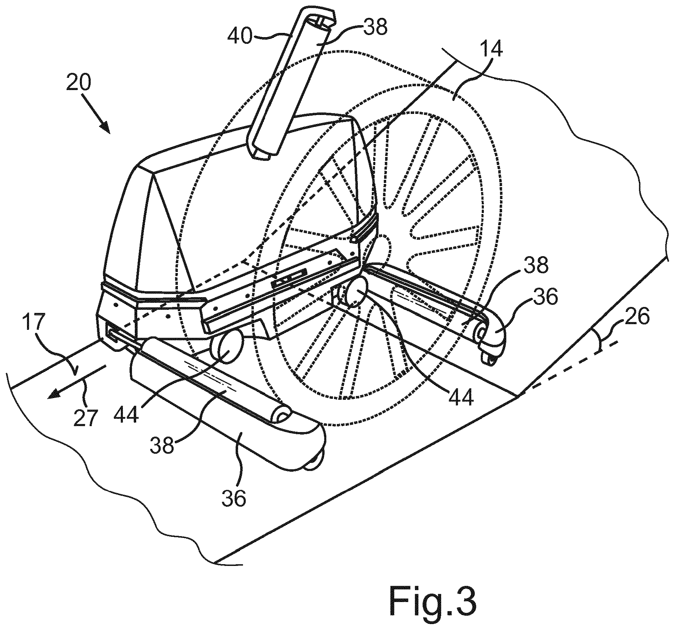

In Fig. 3 ist der Parkroboter 20 bei einer Fahrt an einer Rampe skizziert. Diese Rampe weist einen Steigungswinkel 26 größer 0 Grad auf, das heißt der Fahrboden 17 ist im aktuellen Aufenthaltsbereich des Parkroboters 20 nicht eben. Hier ist nun skizziert, dass das Rad 14 des Kraftfahrzeugs 10, das hier nicht skizziert ist, mittels der Radauflagearme 36 sowie mithilfe des Radhaltearms 40 derart auf dem Parkroboter 20 fixiert ist, dass dieses nicht in der eingezeichneten Richtung 27, die mit einem Pfeil skizziert ist, von dem Parkroboter 20 herunterrollt kann, sondern auf dem Parkroboter 20 ausreichend und zuverlässig fixiert ist.

Letztendlich kann somit ein Kraftfahrzeug 10 von beispielsweise vier Parkrobotern 20, die jeweils eines der Räder 14 des Kraftfahrzeugs 10 angehoben haben und auf dem jeweiligen Parkroboter 20 fixiert haben, in Übereinstimmung mit jeweiligen bereitgestellten Fahrtrajektorien für die jeweiligen Parkroboter 20 zu einer vorgegebenen Zielposition innerhalb beispielsweise eines Parkhauses fahren, auf dem Weg dorthin unter anderem Rampen oder andere Steigen überwinden, und an der Zielposition das Kraftfahrzeug 10 durch Einklappen des jeweiligen Radhaltearms 40 sowie des jeweiligen Paars der Radauflagearme 36 wieder absetzen. Daraufhin können die Parkroboter 20 mit jeweiligen eingeklappten Radauflagearmen 36 sowie eingeklapptem Radhaltearm 40 zum Beispiel zu einem weiteren einzuparkenden Fahrzeug autonom durch das Parkhaus fahren.

Letztendlich wird durch den Radhaltearm 40 eine Verspannung des Rades 14 auf dem Parkroboter 20 von oben ermöglicht, das heißt es wird ein Formschluss zwischen dem Parkroboter 20 und dem Rad 14 hergestellt. Hierbei sind alle Abgleitrollen 38 als passive Abgleitrollen 38 gelagert und sorgen dafür, dass das Rad 14, das beispielsweise mit einer Feststellbremse festgehalten wird, durch Drehen der jeweiligen Abgleitrollen 38 um ihre jeweilige Drehachse 39 dennoch beweglich auf dem Parkroboter 20 gelagert ist. Mit der Abgleitrolle 38 des Radhaltearms 40 wird das Rad 14 mittels der Spannvorrichtung, die durch den Radhaltearm 40 realisiert ist, nach unten in Richtung Parkroboter 20 gedrückt. Die Abgleitrolle 38 des Radhaltearms 40 ist hierbei schräg zu einem Parkrobotergrundkörper angeordnet.

Während der Fahrt auf der Rampe kann sich ein Aufstandspunkt zwischen dem Rad 14 und dem Parkroboter 20 auf einer der Abgleitrollen 38 verhaken, sodass die Gefahr besteht, dass das Kraftfahrzeug 10 in der mit dem Pfeil 27 angezeigten Richtung von dem Parkroboter 20 herunterkippt, das heißt von diesem herunterrollt. Diese Gefahr wird jedoch durch den ausgeklappten Radhaltearm 40 unterbunden, der das Rad 14 fest auf dem Parkroboter 20 fixiert. Der Parkroboter 20 kann sich nun mittels der jeweiligen drehbaren Abgleitrollen 38 um das festgestellte Rad 14 drehen, und zwar um eine Achse, die entlang der jeweiligen Radachse 12 des jeweiligen Rades 14 angeordnet ist. Damit kann der Parkroboter 20 problemlos eine Rampe hoch- und runterfahren, ohne sich gegen das Rad 14 zu verkeilen.

Insgesamt zeigt das Beispiel eine Vorrichtung zum Befahren einer Rampe mit einem Parkroboter 20.

### Bezugszeichenliste

- 10: Kraftfahrzeug
- 12: Radachse
- 14: Rad
- 16: Kraftfahrzeugboden
- 17: Fahrboden
- 20: Parkroboter
- 22: Parkroboterhochrichtung
- 23: Parkroboterlängsrichtung
- 24', 24": Teilbereich
- 25: Winkel
- 26: Steigungswinkel
- 27: Richtung
- 30: Sensoreinheit
- 31: Steuereinheit
- 35: Klapprichtung
- 36: Radauflagearm
- 37: Rolle
- 38: Abgleitrolle
- 39: Drehachse
- 40: Radhaltearm
- 42: Antriebsmaschine
- 43: Batterie
- 44: Antriebsrad
- 46: Kommunikationsschnittstelle
- 48: Sensoreinrichtung
- 49: Steuereinrichtung

## Patentansprüche

1. Parkroboter (20) für ein Kraftfahrzeug (10), wobei der Parkroboter (20) ein Paar Radauflagearme (36) und einen Radhaltearm (40) aufweist und dazu ausgelegt ist, mit eingeklappten Radauflagearmen (36) und eingeklapptem Radhaltearm (40) von außen neben ein Rad (14) des Kraftfahrzeugs (10) autonom heranzufahren, das Rad (14) durch Ausklappen des Paars der Radauflagearme (36) anzuheben und durch Ausklappen des Radhaltearms (40) auf dem Parkroboter (20) zu fixieren, wobei die jeweiligen Radauflagearme (36) eine jeweilige Abgleitrolle (38) aufweisen, deren jeweilige Drehachse (39) in einer ausgeklappten Stellung nach dem Anheben des Rades (14) des Kraftfahrzeugs (10) parallel zu einer Radachse (12) des Kraftfahrzeugs (10) angeordnet ist.

2. Parkroboter (20) nach dem vorhergehenden Anspruch,
**dadurch gekennzeichnet, dass**
in einem in einer Parkroboterhochrichtung (22) oben angeordneten Teilbereich (24') des Parkroboters (20) der Radhaltearm (40) und in einem in Parkroboterhochrichtung (22) unten angeordneten Teilbereich (24") des Parkroboters (20) das Paar Radauflagearme (36) angeordnet ist.

3. Parkroboter (20) nach einem der vorhergehenden Ansprüche,
**dadurch gekennzeichnet, dass**
der Radhaltearm (40) eine Abgleitrolle (38) aufweist, deren Drehachse (39) in einer ausgeklappten Stellung während des Fixierens des Rades (14) des Kraftfahrzeugs (10) auf dem Parkroboter (20) in einem Winkel (25) zwischen größer als 0 Grad und kleiner als 90 Grad zu der Radachse (12) des Kraftfahrzeugs (10) angeordnet ist und dazu ausgelegt ist, an einem in einer Kraftfahrzeughochrichtung oberen Teilbereich des Rades (14) auf das Rad (14) des Kraftfahrzeugs (10) zu drücken.

4. Parkroboter (20) nach einem der vorhergehenden Ansprüche,
**dadurch gekennzeichnet, dass**
der Parkroboter (20) im Teilbereich (24'), an dem der Radhaltearm (40) angeordnet ist, eine Sensoreinheit (30) umfasst und dazu ausgelegt ist, das Ausklappen des Radhaltearms (40) unter Berücksichtigung von Sensordaten der Sensoreinheit (30) zu steuern.

5. Parkroboter (20) nach einem der vorhergehenden Ansprüche,
**dadurch gekennzeichnet, dass**
der Parkroboter (20) eine elektrische Antriebsmaschine (42), eine Batterie (43) zum Versorgen der elektrischen Antriebsmaschine (42) mit elektrischer Energie sowie zumindest ein Antriebsrad (44) zum Fortbewegen des Parkroboters (20) umfasst.

6. Parkroboter (20) nach einem der vorhergehenden Ansprüche,
**dadurch gekennzeichnet, dass**
der Parkroboter (20) eine Sensoreinrichtung (48) umfasst, die dazu ausgelegt ist, eine Umgebung des Parkroboters (20) zu erfassen sowie Hindernisse für den Parkroboter (20) in der erfassten Umgebung zu lokalisieren.

7. Parkroboter (20) nach einem der vorhergehenden Ansprüche,
**dadurch gekennzeichnet, dass**
der Parkroboter (20) eine Kommunikationsschnittstelle (36) für eine Kommunikationsverbindung mit zumindest einem weiteren Parkroboter (20) umfasst.

8. Verfahren zum Betreiben eines Parkroboters (20) nach einem der vorhergehenden Ansprüche, umfassend die Schritte:
- autonomes Heranfahren des Parkroboters (20) mit eingeklappten Radauflagearmen (36) und eingeklapptem Radhaltearm (40) von außen neben ein Rad (14) des Kraftfahrzeugs (10);
- Anheben des Rades (14) durch Ausklappen des Paars der Radauflagearme (36);
- Fixieren des Rades (14) auf dem Parkroboter (20) durch Ausklappen des Radhaltearms (40).

9. Verfahren nach dem vorhergehenden Anspruch, wobei drei weitere Parkroboter (20), jeweils nach dem Verfahren nach dem vorhergehenden Anspruch ein weiteres von insgesamt vier Rädern (14) eines Kraftfahrzeugs (10) angehoben und auf dem jeweiligen Parkroboter (20) fixiert haben, die insgesamt vier Parkroboter (20) in Übereinstimmung mit jeweiligen bereitgestellten Fahrtrajektorien zu einer vorgegebenen Zielposition fahren und dort das Kraftfahrzeug (10) durch Einklappen des jeweiligen Radhaltearms (40) und der jeweiligen Paare der Radauflagearme (36) absetzen.

## Claims

1. Parking robot (20) for a motor vehicle (10), wherein the parking robot (20) has a pair of wheel supporting arms (36) and a wheel holding arm (40) and is designed to autonomously drive up to a wheel (14) of the motor vehicle (10) from the outside with the wheel supporting arms (36) folded in and the wheel holding arm (40) folded in, to lift the wheel (14) by folding out the pair of wheel supporting arms (36) and to secure the wheel on the parking robot (20) by folding out the wheel holding arm (40), wherein the respective wheel supporting arms (36) have a respective slide-off roller (38), the respective rotation axes (39) of which are arranged parallel to a wheel axle (12) of the motor vehicle (10) in a folded-out position once the wheel (14) of the motor vehicle (10) has been lifted.

2. Parking robot (20) according to the preceding claim, **characterized in that**
the wheel holding arm (40) is arranged in a sub-region (24') of the parking robot (20) arranged at the top in a parking robot vertical direction (22) and the pair of wheel supporting arms (36) are arranged in a sub-region (24") of the parking robot (20) arranged at the bottom in the parking robot vertical direction (22).

3. Parking robot (20) according to either of the preceding claims,
**characterized in that**
the wheel holding arm (40) has a slide-off roller (38), the rotation axis (39) of which is arranged at an angle (25) of between greater than 0 degrees and less than 90 degrees with respect to the wheel axle (12) of the motor vehicle (10) in a folded-out position during securing of the wheel (14) of the motor vehicle (10) on the parking robot (20), and is designed to press against the wheel (14) of the motor vehicle (10) in a sub-region of the wheel (14) at the top in a motor vehicle vertical direction.

4. Parking robot (20) according to one of the preceding claims,
**characterized in that**
the parking robot (20) comprises a sensor unit (30) in the sub-region (24') on which the wheel holding arm (40) is arranged and is designed to control folding out of the wheel holding arm (40) taking into account sensor data from the sensor unit (30).

5. Parking robot (20) according to one of the preceding claims,
**characterized in that**
the parking robot (20) comprises an electrical drive machine (42), a battery (43) for supplying electrical power to the electrical drive machine (42) and at least one drive wheel (44) for propelling the parking robot (20) .

6. Parking robot (20) according to one of the preceding claims,
**characterized in that**
the parking robot (20) comprises a sensor device (48) which is designed to record an area surrounding the parking robot (20) and to locate obstacles to the parking robot (20) in the recorded surrounding area.

7. Parking robot (20) according to one of the preceding claims,
**characterized in that**
the parking robot (20) comprises a communication interface (36) for communication connection with at least one further parking robot (20).

8. Method for operating a parking robot (20) according to one of the preceding claims, comprising the steps of:
- the parking robot (20) autonomously driving up to a wheel (14) of the motor vehicle (10) from the outside with the wheel supporting arms (36) folded in and the wheel holding arm (40) folded in;
- lifting the wheel (14) by folding out the pair of wheel supporting arms (36); and
- securing the wheel (14) on the parking robot (20) by folding out the wheel holding arm (40).

9. Method according to the preceding claim, wherein three further parking robots (20), in each case in line with the method according to the preceding claim, have a further one of a total of four wheels (14) of a motor vehicle (10) lifted and secured on the respective parking robot (20), the total of four parking robots (20) move, in concert, with respective provided driving trajectories to a prespecified target position and there set down the motor vehicle (10) by folding in the respective wheel holding arm (40) and the respective pairs of wheel supporting arms (36).

## Revendications

1. Robot de stationnement (20) destiné à un véhicule automobile (10), le robot de stationnement (20) comportant une paire de bras de support de roue (36) et un bras porte-roue (40) et étant conçu pour s'approcher de manière autonome depuis l'extérieur jusqu'à proximité d'une roue (14) du véhicule automobile (10) avec les bras de support de roue (36) repliés et le bras porte-roue (40) replié, pour soulever la roue (14) par déploiement de la paire de bras de support de roue (36) et la fixer sur le robot de stationnement (20) par déploiement du bras porte-roue (40), les bras de support de roue respectifs (36) comportant un galet à glissement respectif (38) dont l'axe de rotation respectif (39) est disposé parallèlement à un axe de roue (12) du véhicule automobile (10) dans une position déployée après relèvement de la roue (14) du véhicule automobile (10).

2. Robot de stationnement (20) selon la revendication précédente, **caractérisé en ce que** le bras porte-roue (40) est disposé dans une zone partielle (24') du robot de stationnement (20) qui est disposée en haut en référence à une direction verticale (22) du robot de stationnement, et la paire de bras de support de roue (36) est disposée dans une zone partielle (24") du robot de stationnement (20) qui est disposée en bas en référence à la direction verticale (22) du robot de stationnement.

3. Robot de stationnement (20) selon l'une des revendications précédentes, **caractérisé en ce que** le bras porte-roue (40) comporte un galet à glissement (38) dont l'axe de rotation (39) est disposé dans une position déployée pendant la fixation de la roue (14) du véhicule automobile (10) sur le robot de stationnement (20) avec un angle (25) compris entre plus de 0 degrés et moins de 90 degrés par rapport à l'axe de roue (12) du véhicule automobile (10) et qui est conçu pour appuyer sur la roue (14) du véhicule automobile (10) au niveau d'une zone partielle supérieure de la roue (14) en référence à la direction verticale du véhicule automobile.

4. Robot de stationnement (20) selon l'une des revendications précédentes, **caractérisé en ce que** le robot de stationnement (20) comprend une unité de capteur (30) dans la zone partielle (24') sur laquelle le bras porte-roue (40) est disposé, et est conçu pour commander le déploiement du bras porte-roue (40) en tenant compte de données de capteur de l'unité de capteur (30).

5. Robot de stationnement (20) selon l'une des revendications précédentes, **caractérisé en ce que** le robot de stationnement (20) comprend une machine d'entraînement électrique (42), une batterie (43) destinée à alimenter la machine d'entraînement électrique (42) en énergie électrique et au moins une roue d'entraînement (44) destinée à déplacer le robot de stationnement (20).

6. Robot de stationnement (20) selon l'une des revendications précédentes, **caractérisé en ce que** le robot de stationnement (20) comprend un moyen capteur (48) qui est conçu pour détecter un environnement du robot de stationnement (20) et localiser des obstacles pour le robot de stationnement (20) dans l'environnement détecté.

7. Robot de stationnement (20) selon l'une des revendications précédentes, **caractérisé en ce que** le robot de stationnement (20) comprend une interface de communication (36) destinée à établir une liaison de communication avec au moins un autre robot de stationnement (20).

8. Procédé de fonctionnement d'un robot de stationnement (20) selon l'une des revendications précédentes, ledit procédé comprenant les étapes suivantes :
- approcher de manière autonome le robot de stationnement (20) avec les bras de support de roue (36) repliés et le bras porte-roue (40) replié depuis l'extérieur jusqu'à proximité d'une roue (14) du véhicule automobile (10) ;
- relever la roue (14) par déploiement de la paire de bras de support de roue (36) ;
- fixer la roue (14) sur le robot de stationnement (20) par déploiement du bras porte-roue (40).

9. Procédé selon la revendication précédente, trois autres robots de stationnement (20), ayant soulevé chacun une autre roue parmi un total de quatre roues (14) d'un véhicule automobile (10) et l'ayant fixée sur le robot de stationnement respectif (20) selon le procédé de la revendication précédente, le total de quatre robots de stationnement (20) se dirigeant, conformément à des trajectoires de déplacement prévues respectives, vers une position cible spécifiée et déposent à cette position le véhicule automobile (10) par reploiement du bras porte-roue respectif (40) et des paires respectives de bras de support de roue (36).
